(19) Europäisches Patentamt
European Patent Office
Office européen des brevets

(11) Veröffentlichungsnummer: **0 222 129**
**B1**

# (12) EUROPÄISCHE PATENTSCHRIFT

(45) Veröffentlichungstag der Patentschrift: **04.04.90**

(51) Int. Cl.⁴: **C08L 71/12**, C08L 77/00, C08L 39/04

(21) Anmeldenummer: **86113414.6**

(22) Anmeldetag: **30.09.86**

(54) **Mischungen aus Polyphenylenether und Polyamid und deren Verwendung zur Herstellung thermoplastischer Formmassen.**

(30) Priorität: **03.10.85 DE 3535274**

(43) Veröffentlichungstag der Anmeldung: **20.05.87 Patentblatt 87/21**

(45) Bekanntmachung des Hinweises auf die Patenterteilung: **04.04.90 Patentblatt 90/14**

(84) Benannte Vertragsstaaten: **BE DE FR GB NL**

(56) Entgegenhaltungen: **EP-A- 0 142 166**

(73) Patentinhaber: **BASF Aktiengesellschaft, Carl-Bosch-Strasse 38, D-6700 Ludwigshafen(DE)**

(72) Erfinder: **Taubitz, Christof, Dr., In der Dreispitz 15, D-6706 Wachenheim(DE)**
Erfinder: **Seiler, Erhard, Dr., Erpolzheimer Strasse 1, D-6700 Ludwigshafen(DE)**
Erfinder: **Mitulla, Konrad, Dr., Schwalbenweg 31, D-6700 Ludwigshafen(DE)**
Erfinder: **Boehlke, Klaus, Dr., Gerhart-Hauptmann-Strasse 53, D-6717 Hessheim(DE)**

**EP 0 222 129 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft Mischungen aus 94,9 bis 5 Gewichtsteilen mindestens eines Polyphenylenethers, der gegebenenfalls bis zu 50 Gew.% durch ein thermoplastisches Styrolpolymerisat (I) ersetzt sein kann, 5 bis 94,9 Gewichtsteile mindestens eines thermoplastischen Polyamids, 0 bis 30 Gewichtsteilen eines Synthesekautschuks und gegebenenfalls üblichen Zusatzstoffen in üblichen Mengen.

Derartige Mischungen können zu Formmassen oder Formkörpern verarbeitet werden, wodurch die Verwendungsmöglichkeiten des an sich nur schlecht verarbeitbaren Polyphenylenethers vergrößert werden kann.

Es ist bereits aus dem US-Patent 3 379 792 bekannt, Mischungen aus Polyphenylenether mit 0,1 bis 25 Gew.% Polyamid zu Formkörpern wie Stangen, Rohren, Behälter etc. durch Extrusion zu verarbeiten. Durch den Zusatz des Polymaids konnten die Fließeigenschaften des Polyphenylenethers verbessert werden. Es wird jedoch in dieser Druckschrift festgestellt, daß bei einem Polyamidzusatz in einer Menge von über 20 Gew.% andere Eigenschaften des Polyphenylenethers in beträchtlichem Ausmaß verschlechtert werden.

Im GB-Patent 2 054 623 ist auch bereits eine Dreikomponentenmischung aus 30 bis 95 Gew.% eines Polyamids und 70 bis 5 Gew.% eines Polyphenylenethers beschrieben, die zur weiteren Verbesserung der Verarbeitbarkeit ein Styrolhomo- oder -copolymerisat enthält. Formkörper aus derartigen Mischungen weisen eine verbesserte Schlagfestigkeit und Lösungsmittelbeständigkeit im Vergleich zu Formkörpern aus reinem Polyphenylenether auf. Bei der Herstellung von Formmassen aus den bekannten Mischungen ist es jedoch erforderlich, einen längeren Mischvorgang bei Schmelztemperatur vorzunehmen. Beim Mischen bei Schmelztemperatur über längere Zeit treten jedoch leicht Abbauerscheinungen auf.

Ähnliche Nachteile weisen die aus neueren Literaturstellen bekannten, Polyphenylenether und Polyamide enthaltenden Dreikomponentenmischungen mit Polystyrolen oder kautschukmodifizierten Styrolharzen (vgl. US-Patent 4 242 254 und EP-A-107 660), Copolymerisaten eines Olefins mit Glycidyl(meth)-acrylat (vgl. EP-A-55 473), Copolymerisaten aus Styrol mit Maleinsäureanhydrid oder Maleinsäureimid (vgl. EP-A-46 040), Dienpolymeren, Polyepichlorhydrinen ect. (vgl. EP-A-24 120) oder Copolymerisaten aus Styrol und (Meth-)Acrylnitril (vgl. EP-Anm.-Nr. 85115161.3) auf.

Aufgabe der vorliegenden Erfindung war es daher, thermoplastische Formmassen auf Basis Polyphenylenether und Polyamide aufzufinden, die neben einer guten Verarbeitbarkeit gute thermische, mechanische und elektrische Eigenschaften aufweisen und sich insbesondere durch eine hohe Schlagzähigkeit und gute Lösungsmittelbeständigkeit auszeichnen.

Diese Aufgabe wird gelöst durch Mischungen entsprechend den Patentansprüchen 1 bis 7.

Die Mischungen enthalten 94,9 bis 5, bevorzugt 70 bis 20, insbesondere 60 bis 35 Gewichtsteile Polyphenylenether und 5 bis 94,9, bevorzugt 5 bis 70, insbesondere 25 bis 65 Gewichtsteile Polyamid sowie gegebenenfalls bis zu 30, bevorzugt 2 bis 20 Gewichtsteile eines synthetischen Kautschuks, wobei der Polyphenylenether gegebenenfalls bis zu 50, bevorzugt durch 10 bis 50 Gew.% durch ein thermoplastisches Styrolpolymerisat (I) ersetzt sein kann. Die Mischungen erhält man durch Mischen der Einzelkomponenten bei Temperaturen von 230 bis 320°C in üblichen Mischvorrichtungen wie Extrudern oder Knetern. Falls ein Teil des Polyphenylenethers durch Styrolpolymerisate (I) ersetzt ist, ist es vorteilhaft, die Polyphenylenether mit diesen Styrolpolymerisaten vorzumischen und dieses Gemisch dann mit einem Gemisch aus Polyamid und dem anderen Styrolpolymerisat (II) in der Schmelze zu mischen.

Unter Polyphenylenethern werden hochmolekulare Poly(phenylenoxide) verstanden, die durch oxidative Kupplung von alkylsubstituierten Phenolen, insbesondere von 2,6-Dialkylphenolen zu einer Kette alkylsubstituierter, in para-Stellung durch Sauerstoffatome etherartig gebundene Benzolringe verstanden. Die Polyphenylenether weisen bevorzugt Molekulargewichte aus dem Viskositätsmittel ($M_v$) von 10 000 bis 90 000, insbesondere 20 000 bis 80 000, bestimmt nach der in "Macromolecular Synthesis" 1, (1978), Seite 78 angegebenen Methode, auf. Die Polyphenylenether sind an sich aus der Literatur seit längerem bekannt (vgl. US-Patente 3 661 848, 3 219 625, 3 378 505, 3 306 874, 3 306 875 und 3 639 656), so daß sich hier eine weitere Beschreibung erübrigt. Besonders geeignete Polyphenylenether sind Poly(2,6-dimethyl-1,4-phenylen)ether, Poly(2,6-diethyl-1,4-phenylen)ether oder Poly(2-methyl-6-ethyl-1,4-phenylen)ether. Es können auch Gemische verschiedener Polyphenylenether oder Copolymere verschiedener Alkylphenole verwendet werden.

Als thermoplastische Styrolpolymerisate (I) kommen alle üblichen Homo- und Copolymerisate des Styrols in Betracht. Üblicherweise liegen die Molekulargewichte der gebräuchlichen Styrolpolymerisate (Gewichtsmittel $M_w$) zwischen 150 000 und 300 000. Geeignete Styrolpolymerisate (I) sind beispielsweise Polystyrol, Poly-α-methylstyrol, Poly-p-methylstyrol oder Kautschuk modifizierte Styrolpolymerisate, insbesondere auf Basis Styrol-Butadien-, Butadien-, Butadien-Styrol-Block- oder Isopren-Styrol-Blockpolymerisate. Derartige Styrolpolymerisate sind dem Fachmann aus der Literatur und Praxis so geläufig, daß sich an dieser Stelle eine nähere Erläuterung erübrigt (vgl. "Ullmanns Encyklopädie der technischen Chemie", 4. Auflage, BAnd 19, Seiten 265 bis 295, Verlag Chemie GmbH, 1980). Mischungen aus geeigneten Styrolpolymerisaten (I) mit Polyphenylenethern sind zudem in zahlreichen Literaturstellen bereits beschrieben (vgl. GB-A-2 054 623, US-A-4 242 254, EP-A-107 660, US-A-4 433 088 und

EP-A-55 473). Die Styrolpolymerisate sind nur gegebenenfalls in den Mischungen vorhanden, vorzugsweise nämlich dann, wenn aufgund der Zusammensetzung der anderen Mischungskomponenten die Verarbeitbarkeit durch Zugabe geeigneter Mengen thermoplastischen Styrolpolymerisats noch weiter verbessert werden kann.

Die Mischungen enthalten obligatorisch mindensten ein übliches thermoplastisches Polyamid. Derartige Polyamide sind so bekannt, daß sie hier nicht im einzelnen abgehandelt werden müssen (vgl. "Ullmanns Encyklopädie der technischen Chemie", 4. Auflage, Band 19, Seiten 39 bis 59, Verlag Chemie GmbH, 1980). Die Molekulargewichte (Zahlenmittel $M_n$) liegen bei den gebräuchlichen Polyamiden bei 15 000 bis 50 000. Besonders geeignete Polyamide sind Polyamid-6, Polyamid-66 sowie Polyamide, die aus Hexamethylendiamin und Isophthalsäure sowie Terephthalsäure aufgebaut sind. Es ist auch möglich, Mischungen verschiedener Polyamide zu verwenden. Mischungen aus geeigneten Polyamiden und Polyphenylenethern sind in mehreren Druckschriften bereits vorbeschrieben (vgl. US-A-3 3379 792, GB-A-2 054 623, US-A- 4 242 254, EP-A- 92 776, 129 825, 131 445, 46 040 oder 24 120).

Zur Schlagzähmodifizierung können die Mischungen Synthesekautschuk enthalten auf Basis Polybutadien-, Acrylat-, Styrol-Butadien-, Acrylnitril-Butadien-, Ethylen-Propylen-, Polyisoprenstyrolgepfropfte Ethylen-Propylen-Kautschuk, Polyesterelastomere, Ethylenkautschuke und Ionomere, Styrol-Butadien-Blockcopolymere einschließlich Styrol-Butadien-Styrol-Blockcopolymere, analoge Isopren-Blockcopolymere oder (teil)hydrierte Blockcopolymere. Derartige synthetische Kautschuke sind an sich bekannt und zusammenfassend in "Ullmanns Encyklopädie der technischen Chemie", 4. Auflage, Band 13, Seiten 595 bis 634, Verlag Chemie GmbH, 1977 beschrieben. Mischungen aus Polyphenylenethern mit schlagzähmodifizierendem Synthesekautschuk sind bereits Stand der Technik, so daß sich weitere Erläuterungen erübrigen (vgl. EP-A-55 473 und 46 040). Der gegebenenfalls in der Mischung einzusetzende schlagzäh modifizierte Kautschuk wird dann mitverwendet, wenn von den Mischungen besonderer Wert auf Schlagzähigkeit gelegt wird.

Darüber hinaus können die erfindungsgemäßen thermoplastischen Formmassen gegebenenfalls übliche Zusatzstoffe in üblichen Mengen enthalten. Als Zusatzstoffe seien genannt Hitze- und Lichtstabilisatoren, Gleit- und Enformungsmittel, Färbemittel, wie Farbstoffe und Pigmente. Geeignete Zusatzstoffe sind auch Verstärkungsmittel, wie Glasfasern, Wollastonit, Talkum, Kreide, Zinksulfid, Gipsfasern, synthetische Calciumsilikate, Kaolin, calciniertes Kaolin, in Mengen bis zu 50 Gew.%, vorzugsweise bis 30 Gew.%, bezogen auf die thermoplastische Formmasse, ferner Phosphorverbindungen, wie Phosphate, Phosphorsäureester, Phosphorigsäureester, Phosphinsäureester, Phosphonigsäureester oder organische Phosphinoxide.

Erfindungsgemäß sollen die Mischungen zusätzlich noch 0,1 bis 30, bevorzugt 1 bis 20, insbesondere 5 bis 15 Gewichtsteile eines vom Styrolpolymerisat (I) verschiedenen Styrolcopolymerisats (II) enthalten, das (Alkyl-)Styrol und eine Lactamgruppe aufweisendes olefinisch ungesättigtes Monomer sowie gegebenenfalls (Meth-)Acrylnitril einpolymerisiert hat, wobei das Copolymerisat (II) gegebenenfalls 2 bis 20 Gew.%, bezogen auf (II), eines mit (Alkyl-)Styrol und Lactammonomer gepfropften Synthesekautschuk enthält. Bevorzugt enthält das Styrolpolyerisat (II) 70 bis 99,7, insbesondere 93 bis 99 Gew.% (Alkyl-)-Styrol und 0,3 bis 30, insbesondere 1 bis 7 Gew.% des Lactammonomeren und gegebenenfalls (Meth)-Acrylnitril einpolymerisiert. Geeignete (Alkyl-)Styrole sind dabei Styrol, α-Methylstyrol oder p-Methylstyrol oder deren Gemische. Das Molekulargewicht des Copolymerisats (II) (Gewichtsmittel $M_w$) liegt vorteilhaft zwischen 5 000 und 200 000. Als Comonomer zu Styrol werden eine Lactamgruppe aufweisende olefinisch ungesättigte Monomere eingesetzt, es können aber auch Mischungen aus Lactammonomer und unter 10 Gew.%, bezogen auf die Mischung (Meth)Acrylnitril verwendet werden. Styrolcopolymerisate (II) der beschriebenen Art sind an sich aus der Literatur bekannt (J. of Polym. Sci., Polym. Chem. Ed. 19, [1981], Seiten 223 bis 233; Polym. Commun., 24, [1983], (6), Seiten 188 bis 191; Makrom. Chem. 179, [1978], Seiten 1239 bis 1248; US-A-3 651 035 oder Macromol. Chem. and Phys., Basel 184, [1983], Seiten 949 bis 953).

Es können folgende Lactammonomere eingesetzt werden:

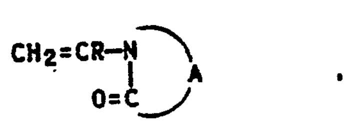

worin A die oben angegebene Bedeutung hat und insbesondere $-CH_2-CH_2-CH_2-$, $-C(R)_2-C(R)_2-$ oder $-(CH_2)_5-$, wobei R = H, $CH_3$, ist. Bevorzugt ist auch eine Verbindung wie:

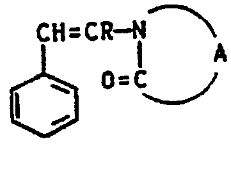

Allgemein gesagt sollen die Styrolcopolymerisate (II) neben (Alkyl-)Styrol eine Lactamgruppe aufweisendes Monomer mit der allgemeinen Gruppierung

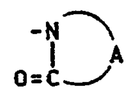

einpolymerisiert enthalten, worin A die oben angegebene Bedeutung hat.

Bevorzugte Lactammonomere sind Acryloyllactame der allgemeinen Formel:

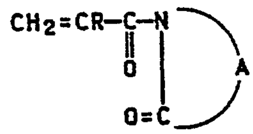

worin A = ein gegebenenfalls mit Alkylgruppen substituierter Alkylenrest mit 2 bis 15 Kohlenstoffatomen und R = H oder $CH_3$, wobei das (Meth)Acrylolcaprolactam besonders geeignet ist.

Das Styrolcopolymerisat (II) enthält gegebenenfalls 2 bis 20, insbesondere 5 bis 10 Gew.%, bezogen auf das Copolymerisat (II), eines mit (Alkyl-)Styrol und Lactammonomer gepfropften synthetischen Kautschuks. Als synthetischer Kautschuk wird bevorzugt Polybutadien, Styrol-Butadien-Copolymerisat Styrol-Butadien-Styrol-Blockcopolymerisat oder Styrol-Butadien (hydriert)-Styrol-Blockpolymerisats eingesetzt. Derartige Pfropfcopolymerisate werden durch Copolymerisation der Monomeren in Gegenwart des Synthesekautschuks erhalten. Die Technik des Pfropfens von ethylenisch ungesättigten Monomeren auf Synthesekautschuk ist Stand der Technik und beispielsweise in den US-Patenten 4 154 777 und 3 509 237 beschrieben.

Es ist ein Vorteil der erfindungsgemäßen Mischungen, daß beim Verarbeiten zu Formmassen bzw. zu Formkörpern keine Phasentrennung eintritt, weil die einzelnen Polymeren ineinander optimal dispergiert sind. Die neuen Mischungen haben daher die günstige Eigenschaft, daß sie gut verarbeitbar sind, Formkörper mit hohem mechanischem Niveau liefern, die sich zudem durch eine gute Schlagzähigkeit und Lösungsmittelresistenz auszeichnen. Die erfindungsgemäßen Mischungen eignen sich zur Herstellung von Formkörpern durch Spritzgießen oder Extrusion.

Der Gegenstand der Erfindung sei an folgenden Beispielen veranschaulicht, wobei die genannten Teile sich jeweils auf das Gewicht beziehen.

Eingesetzte Polymere

$A_1$: Poly-(2,6-dimethyl-1,4-phenylen)-ether mit einer relativen Viskosität von 0,60

$B_1$: Polyamid-6,6 mit einer relativen Viskosität von 3,1

$B_2$: Polyamid-6,6 mit einer relativen Viskosität von 4,2

$C_1$: Styrol-N-Acryloylcaprolactam-Copolymerisat (96 Gew.% Styrol, 4 Gew.% Acryloylcaprolactam), hergestellt durch kontinuierliche Lösungscopolymerisation bei 145°C und 4 Stunden Verweilzeit mit einem $M_w$ = 80 000

$C_2$: Styrol-N-Acryloylcaprolactam-Copolymerisat (97,5 Gew.% Styrol, 2,5 Gew.% N-Acryloylcaprolactam), wie $C_1$, mit einem $M_w$ = 105.000

$D_1$: Styrol-Butadien-Styrol-Blockcopolymerisat, hergestellt durch anionische Polymerisation (32 Gew.% Styrol, 68 Gew.% Butadien) mit einem $M_w$ = 110.000

Herstellung der Mischungen

Die Polymeren wurden bei 275°C gemäß Gewichtsteilen in Tabelle 1 in einem Zweischneckenextruder abgemischt, die Formmasse wird granuliert und im Spritzguß zu Formkörpern verarbeitet. Die erfindungsgemäßen Proben zeigen im Gegensatz zu den Vergleichsbeispielen keine Delaminierungen.

| Beispiele Nr. | Gewichtsteile Polyphenylen-ether | Polyamid | Styrol/Lactam | Kautschuk | DIN 53453 Schlagzähigkeit kJ/m² | DIN 53453 Kerbschlagzähigkeit kJ/m² |
|---|---|---|---|---|---|---|
| 1* | 70 $A_1$ | 30 $B_1$ | - | - | 10,1 | 1,2 |
| 2 | 70 $A_1$ | 30 $B_1$ | 8 $C_1$ | - | 24,4 | 5,2 |
| 3* | 50 $A_1$ | 50 $B_2$ | - | - | 11,4 | 1,0 |
| 4 | 50 $A_1$ | 50 $B_2$ | 7,5 $C_1$ | - | 28,2 | 4,8 |
| 5 | 45 $A_1$ | 60 $B_2$ | 10 $C_2$ | - | 29,2 | 5,1 |
| 6 | 50 $A_1$ | 50 $B_1$ | 12 $C_2$ | - | 34,1 | 5,2 |
| 7* | 45 $A_1$ | 55 $B_2$ | - | 10 $D_1$ | 17,2 | 0,9 |
| 8 | 45 $A_1$ | 55 $B_1$ | 10 $C_1$ | 10 $D_1$ | 82,1 | 7,9 |
| 9* | 50 $A_1$ | 50 $B_2$ | - | 12 $D_1$ | 15,1 | 1,4 |
| 10 | 50 $A_1$ | 50 $B_2$ | 8 $C_2$ | 12 $D_1$ | kein Bruch | 9,1 |
| 11 | 55 $A_1$ | 45 $B_2$ | 10 $C_1$ | 14 $D_1$ | kein Bruch | 9,6 |

*Vergleichsbeispiel

## Patentansprüche

1. Mischungen aus 94,9 bis 5 Gewichtsteilen mindestens eines Polyphenylenethers, der gegebenenfalls bis zu 50 Gew.% durch ein thermoplastisches Styrolpolymerisat (I) ersetzt sein kann, 5 bis 94,9 Gewichtsteilen mindestens eines thermoplastischen Polyamids, 0 bis 30 Gewichtsteilen eines Synthesekautschuks und gegebenenfalls üblichen Zusatzstoffen in üblichen Mengen, dadurch gekennzeichnet, daß sie zusätzlich enthalten 0,1 bis 30 Gewichtsteile eines von (I) verschiedenen Styrolcopolymerisats (II), das (Alkyl-)Styrol und eine Lactamgruppe aufweisendes olefinisch ungesättigtes Monomer sowie gegebenenfalls (Meth-)Acrylnitril einpolymerisiert hat, wobei das Copolymerisat (II) gegebenenfalls 2 bis 20 Gew.% eines mit (Alkyl-)Styrol und Lactammonomer gepfropften Synthesekautschuks enthält.

2. Mischungen nach Anspruch 1, dadurch gekennzeichnet, daß sie 1 bis 20 Gewichtsteile des Styrolcopolymerisats (II) enthalten.

3. Mischungen nach Anspruch 1, dadurch gekennzeichnet, daß das Styrolcopolymerisat (II) 70 bis 99,7 Gew.% (Alkyl-)Styrol und 0,3 bis 30 Gewichtsprozent des Lactammonomers und gegebenenfalls (Meth-)Acrylnitril einpolymerisiert enthält.

4. Mischungen nach Anspruch 1, dadurch gekennzeichnet, daß das Lactammonomer ein Acryloyllactam der allgemeinen Formel:

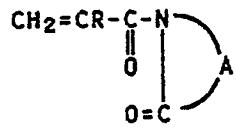

ist, worin A = ein gegebenenfalls mit Alkylgruppen substituierter Alkylenrest mit 2 bis 15 Kohlenstoffatomen und R = H oder $CH_3$.

5. Mischungen nach Anspruch 1, dadurch gekennzeichnet, daß das Lactammonomer (Meth-)Acryloylcaprolactam ist.

6. Mischungen nach Anspruch 1, dadurch gekennzeichnet, daß das (Alkyl-)Styrol und Lactammonomer auf Synthesekautschuk aufgepfropft sind.

7. Mischungen nach Anspruch 1, dadurch gekennzeichnet, daß der Synthesekautschuk Polybutadien, Styrol-Butadien-Copolymerisat, Styrol-Butadien-Styrol-Blockcopolymerisat oder Styrol-Butadien(hydriert)-Styrol-Blockpolymerisat ist.

8. Verwendung der Mischungen nach Anspruch 1 zur Herstellung von Formmassen bzw. Formkörpern.

## Claims

1. A mixture of from 94.9 to 5 parts by weight of one or more polyphenylene ethers, not more than 50% by weight of which may be replaced by a thermoplastic styrene polymer (I), from 5 to 94.9 parts by weight of one more thermoplastic polyamides and from 0 to 30 parts by weight of a synthetic rubber, with or without conventional additives in the usual amounts, wherein the said mixture additionally contains from 0.1 to 30 parts by weight of a styrene copolymer (II) which differs from (I) and has, as copolymerized units, (alkyl)styrene and an olefinically unsaturated monomer containing a lactam group and, if required, (meth)acrylonitrile, where the copolymer (II) may contain from 2 to 20% by weight of a synthetic rubber grafted with (alkyl)styrene and lactam monomer.

2. A mixture as claimed in claim 1, which contains from 1 to 20 parts by weight of the styrene copolymer (II).

3. A mixture as claimed in claim 1, wherein the styrene copolymer (II) contains from 70 to 99.7% by weight of (alkyl)styrene and from 0.3 to 30 percent by weight of the lactam monomer and, if required, (meth)acrylonitrile as copolymerized units.

4. A mixture as claimed in claim 1, wherein the lactam monomer is an acryloyl lactam of the formula

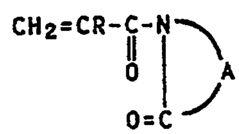

where A is an unsubstituted or alkyl-substituted alkylene radical of 2 to 15 carbon atoms and R is H or $CH_3$.

5. A mixture as claimed in claim 1, wherein the lactam monomer is (meth)acryloylcaprolactam.

6. A mixture as claimed in claim 1, wherein the (alkyl)styrene and lactam monomer are grafted onto or into synthetic rubber.

7. A mixture as claimed in claim 1, wherein the synthetic rubber is polybutadiene, styrene/butadiene copolymer, styrene/butadiene/styrene block copolymer or styrene/butadiene(hydrogenated)/styrene block polymer.

8. Use of a mixture as claimed in claim 1 for the production of molding materials or moldings.

**Revendications**

1. Mélanges constitués de 94,9 à 5 parties en poids d'au moins un poly(éther phénylénique) qui peut éventuellement être remplacé jusqu'à 50% en poids par un polymère du styrène thermoplastique (I), de 5 à 94,9 parties en poids d'eau moins un polyamide thermoplastique, de 0 à 30 parties en poids d'un caoutchouc de synthèse et, éventuellement, d'additifs usuels en proportions habituelles, caractérisés en ce qu'ils contiennent, complémentairement, de 0,1 à 30 parties en poids d'un copolymère du styrène (II) qui diffère de (I), qui contient, à l'état incorporé par polymérisation, un (alkyl-)styrène et un monomère à insaturation oléfinique, présentant un radical lactame, comme éventuellement aussi du (méth)acrylonitrile, où le copolymère (II) contient éventuellement 2 à 20% en poids d'un caoutchouc de synthèse greffé avec de l'(alkyl-)styrène et un monomère lactamique.

2. Mélanges suivant la revendication 1, caractérisés en ce qu'ils contiennent de 1 à 20 parties en poids du copolymère du styrène (II).

3. Mélanges suivant la revendication 1, caractérisés en ce que le copolymère du styrène (II) contient jusqu'à 99,7% en poids de l'(alkyl-)styrène et de 0,3 à 30% en poids du monomère lactamique et éventuellement du (méth-)acrylonitrile à l'état incorporé par polymérisation.

4. Mélanges suivant la revendication 1, caractérisés en ce que le monomère lactamique est un acryloyllactame de la formule générale

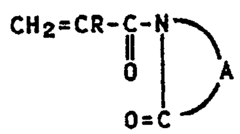

dans laquelle A représente un radical alkylène comportant de 2 à 15 atomes de carbone, éventuellement substitué par des radicaux alkyle et R représente un atome d'hydrogène ou un radical $CH_3$.

5. Mélanges suivant la revendication 1, caractérisés en ce que le monomère lactamique est le (méth-)acryloylcaprolactame.

6. Mélanges suivant la revendication 1, caractérisés en ce que l'(alkyl-)styrène et le monomère lactamique sont greffés sur le caoutchouc de synthèse.

7. Mélanges suivant la revendication 1, caractérisés en ce que le caoutchouc de synthèse est le polybutadiène, un copolymère de styrène et de butadiène, un copolymère à blocs de styrène-butadiène-styrène, ou un polymère à blocs de styrène-butadiène (hydrogéné)-styrène.

8. Utilisation des mélanges suivant la revendication 1 en vue de la fabrication de matières à mouler ou d'articles moulés.